# EUROPEAN PATENT APPLICATION

(11) **EP 1 648 171 A1**
(43) Date of publication of application: **19.04.2006**
(21) Application number: 04360093.1
(22) Date of filing: 18.10.2004
(51) Int. Cl.: H04N 7/24, H04N 7/64

(54) **A method of encoding and decoding of data packets using length field**

(71) Applicant: ALCATEL, 75008 Paris (FR)
(72) Inventor: Nguyen, Hang, 92110 Clichy-la-Garenne (FR); Faucheux, Fréderic, 75014 Paris (FR)
(74) Representative: Richardt, Markus Albert

(57) **Abstract**

For increasing the robustness of data against errors due to transmission, length fields are added containing information on the length of the following data block. If an error is detected, the concerned data block is discarded, thus preventing error propagation. Preferably, the length field is error correction encoded.

## Description

### Field of the invention

The present invention relates to the field of encoding and decoding of data packets, and more particularly without limitation to wireless transmission of packetized data.

### Background and prior art

Multimedia transmission over wireless networks encounters still several problems, resulting in a bad user video quality. This happens especially in real-time applications, because retransmission protocols like ARQ etc. cannot be applied. Unreliabilities in transmission result in errors in the transmitted compressed video sequences.

Usually, image information is compressed for transmission, using Variable Length Code (VLC). One of the most important problems is the loss of VLC synchronization, when transmitting video data over non-reliable transmission media such as a wireless channel like the one used for EDGE (enhanced data for global evolution, a enhanced GPRS).

In EP 1 443 774 A1, which is hereby incorporated by reference, it has been proposed to trans-code parts of VLC encoded data into Fixed Length Code (FLC) encoded data to limit the problem of synchronization loss. This has the advantage that a transmission error does not propagate from one data packet to the next and therefore remains isolated with no or little visible impact on a video transmission.

### Summary of the invention

It is an object of the present invention to provide an improved encoding and decoding method of data packets, especially for wireless transmission over noisy channels.

The present invention provides for an improved method of encoding a data packet, a decoding method and a method of transmitting a data packet as well as a corresponding computer program product, encoder, decoder, and telecommunication system.

The basic idea of the invention is, in a data packet with header and data block, to add a field containing information on the length of the data block. This is useful when decoding in case the data packet has an error. Then, knowing the length of the data block, this data block can be discarded, thus avoiding error propagation. The effect of the error is only local. Only the data packet that the error, e.g. corrupted bit, belongs to is corrupted, and the remaining data packets of a bit stream are still correct. By discarding the corrupted data block, the remaining data packets are not affected by the error and can be correctly further decoded.

There is a small bit rate increase due to the addition of a length field. But this bit rate increase is over compensated by the fact, that transmission schemes that are less protected, but have a high bit rate can be used. Hence, a gain in terms of bandwidth is achieved.

In preferred embodiments of the present invention, the data packets are further protected against bit corruption and other errors by encoding at least the field containing information on the length of the data block by means of an error correction code.

In preferred embodiments of the present invention, in case of detection of error, an error resilience method is applied. With help of the error resilience method, the discarded data can be replaced. By using the information on the length of the discarded data, the result of the error resilience method is improved.

Preferably, the data packets are encoded using at least for part of the data a FLC coding scheme, as explained in EP 1 443 774 A1.

The present invention is particularly advantageous for real-time audio and/or video transmissions over noisy channels, such as over a cellular wireless telecommunication network. In such networks, it is likely that a transmission error occurs in the transmission of the data packet, but it is unlikely that the complete packet is lost. The present invention enables to limit the transmission error to the data packet where the error occurred and prevents that the error propagates through consecutive data packets.

However application of the present invention is not limited to wireless communication, but can also be used for communication over the internet, for the real-time transport protocol (RTP) and other protocols. Examples for applications of the present invention include the following:
- source encoder,
- RTP level when building video flows into RTP/UDP/IP frames,
- SNDCP/PDCP layers for cellular systems (i.e. in NSS equipment),
- RLC/MAC level (in a RAN equipment),
- a dedicated video compression function between RTP and physical layer of the wireless link (e.g. in RTP/UDP/IP header compression function).

### Brief description of the drawings

Preferred embodiments of the invention will be explained in greater detail by making reference to the drawings in which:
- Figure 1: shows a bit stream of data packets;
- Figure 2: shows an embodiment of the transmission method according to the invention;
- Figure 3: is a block diagram of a telecommunication system; and
- Figure 4: is a plot of picture signal noise ratio versus signal noise ratio.

### Detailed description of the invention

The present invention will be further explained using the example of bit streams according to the H.263 standard.

In commonly used video compression standards such as e.g. H.263 or MPEG-4, videos are compressed spatially and temporally. For temporal compression, only the first image or one image periodically is entirely encoded. This is called the intra frame. For the following images, only differences with the previous image are encoded. They are called inter frames. For spatial compression of videos, or fixed images like JPEG-data as well, two compression steps take place: a transform compression such as Discrete Cosine Transform (DCT) or Wavelet Transform, and an entropy compression such as e.g. Huffman code, arithmetic code, RVLC, U-VLC, which all are VLC coding schemes

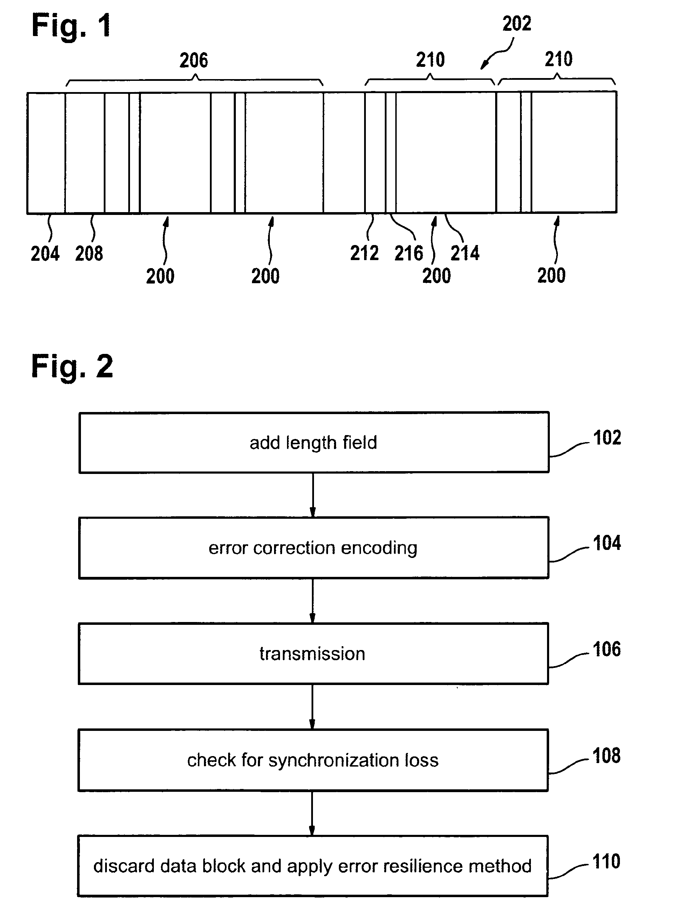

An example for a compressed video bit stream 202 is illustrated in Figure 1. The compressed video bit stream 202 is hierarchically organized into several layers: the picture layer, the groups of blocks 206, the macro-blocks 210 and the data blocks 214. Each layer comprises a layer header and data fields corresponding to the next layer.

The bit stream 202 illustrated in Figure 1 is composed of a picture header 204 before two groups of blocks 206. Each group of blocks 206 is composed of a group of block header 208 and two macro-blocks 210. The macro-blocks 210 are equivalent to data packets 200 in the present example and comprise a macro-block header 212 and a data block 214 each, as well as a data field 216 containing the length k of the following data block 214. The data field 216 may be considered to be part of the macro-block header 212.

Without the length field 216, an error like a synchronization loss would propagate spatially, until the decoder decoding the transmitted data would realize that there is an error and the next synchronization code would be found. In the H.263 standard, a whole group of blocks 206 or a picture frame 202 or even several pictures could be lost. Temporally, the error would propagate until the next intra-coded frame or block.

This problem is avoided thanks to the information on the length of the following data block 214 in each macro-block 210. As the decoder knows, how many bits to discard to jump to the next, correct macro-block 210, when the error is detected, the decoder can easily resynchronized on the next macro block 210.

Possible steps of the methods according to the invention are illustrated in Figure 2. In a first step 102, a length field is added to a data packet, encoding the length of the following data block. It will be noted, that it is especially convenient to add a length field to data packets at least partly encoded according to FLC as explained in EP 1 433 774 A1. In this case, the number of bits to be coded is a multiple of N bits, where N is the length of the FLC coefficients. Then one can choose the length field to be equal to the number of bits in the data block divided by N. If one wants to use this technique with VLC data, too, padding with zeros after each end of a data block would be necessary.

To avoid propagation of errors due to corruption of the length field during transmission, in a next step 104, at least the length field is error correction encoded. Other sensitive header fields, i.e. fields leading to the loss of whole blocks or frames, if corrupted, such as e.g. Slice number, PTYPE (picture type), COD (telling, whether the next macro-block is coded or not), CBPY (coded block pattern for luminance) etc. are preferably error correction encoded, too. For fixed length fields, simple protection schemes such as Hamming protection code can be used.

Then the encoded data packet are transmitted (step 106). Because the data packets are less sensitive to errors, less protected transmission schemes can be used, for example MCS-3 to MCS-9 can be used instead of MCS-1 or MCS-2. The advantage is, that MCS-3 to MCS-9 have much higher data rates than MCS-1 or MCS-2. If one compares MCS-9 to MCS-1, the data rate is 670% higher in MCS-9. This overcompensates the increase of around 10% in bit rate for typical video sequences due to the addition of the length field.

After transmission has taken place, the data packets are checked for synchronization loss (step 108), and, where necessary, the information on the length of a data packet is utilized to discard exactly the corresponding bits (step 110). In case of detection of error and discarding, an error resilience method is applied after discarding. With help of the error resilience method, the discarded data can be replaced. By using the information on the length of the discarded data, the result of the error resilience method is improved.

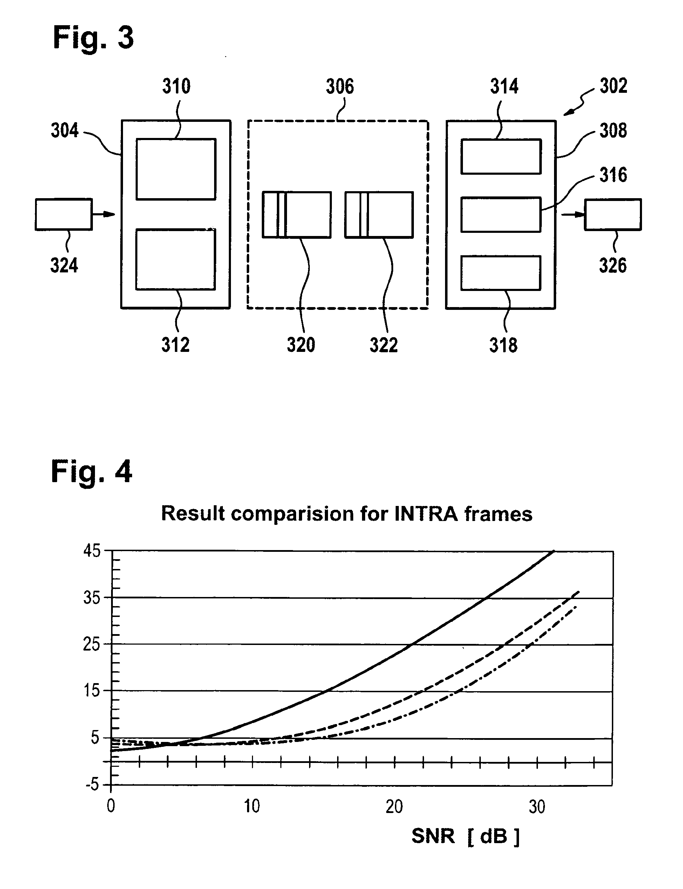

The invention can be implemented as software and/or hardware. A possible telecommunication system 302 is sketched in Figure 3. Video data 324 is encoded by encoder 304, transmitted by channel 306 and decoded by decoder 314 to video data 326. The encoder 304 has an encoding module 310 adding the length field and eventually doing error correction encoding, and a control program 312 for controlling operation of the encoder. Via channel 306, encoded data packets 320, 322 are transmitted and upon reception are checked for errors by module 314 of the decoder 308. If necessary, a data block of known length is discarded by module 316. Preferably, module 316 is designed to apply an error resilience method after discarding the data block. Operation of decoder 308 is controlled by control program 318.

The methods according to the invention increase the robustness to channel errors. The errors are only local and do not propagate any more. Only the data block, the corrupted bit belongs to, is corrupted, and the remaining bit stream is still correct. The invention is applicable to any compression mechanism, e.g. MPEG4, JPEG etc.. A major advantage is, that the bit stream can be transmitted using less protected transmission schemes having higher data rate.

In typical video sequences and especially in the H.263 standard, the DCT coefficients represent about 80% of the bit stream. In a H.263 bit stream, all these 80% are sensitive to synchronization loss. This is remedied by the present invention.

Figure 4 illustrates the result of simulations, wherein the quality of video transmission according to the invention combined with the FLC-method of EP 1 443 774 A1 and error correction encoding of very sensitive fields is compared to the quality of H.263 standard transmission and the quality of transmission using the FLC-method of EP 1 443 774 A1 alone. The picture signal noise ratio (PSNR) of intra frames, a figure of merit for the video quality, is plotted against the signal noise ratio (SNR), a figure of merit for the transmission channel quality. Given the same channel quality, a higher video quality is achieved by the method according to the present invention.

Although having described several preferred embodiments of the invention, those skilled in the art would appreciate that various changes, alterations, and substitutions can be made without departing from the spirit and concepts of the present invention. The invention is, therefore, claimed in any of its forms or modifications with the proper scope of the appended claims. For example various combinations of the features of the following dependent claims could be made with the features of the independent claim without departing from the scope of the present invention. Furthermore, any reference numerals in the claims shall not be construed as limiting scope.

### List of Reference Numerals

- 102: step
- 104: step
- 106: step
- 108: step
- 110: step
- 200: data packet
- 202: frame
- 204: picture header
- 206: group of blocks
- 208: group of blocks header
- 210: macro block
- 212: macro block header
- 214: data block
- 216: length field
- 302: telecommunication system
- 304: encoder
- 306: channel
- 308: decoder
- 310: module
- 312: control program
- 314: module
- 316: module
- 318: control program
- 320: data packet
- 322: data packet
- 324: video data
- 326: video data

## Claims

1. A method of encoding a data packet, the data packet having a header block and a data block, the method comprising encoding the data packet by adding a field before the data block containing information on the length of the data block.

2. A method of decoding a data packet, the data packet having a header block and a data block and an additional field containing information on the length of the data block, the method comprising the steps of:
- detecting, whether there is an error in the data packet;
- in case of detection of error, using the information on the length of the data block for discarding the data block.

3. A method of transmitting a data packet, the data packet having a header block and a data block, the method comprising the steps of:
- encoding the data packet by adding a field before the data block containing information on the length of the data block;
- transmitting of the encoded data packet over a channel;
- detecting, whether there is an error in the transmitted data packet;
- in case of detection of error, using the information on the length of the data block for discarding the data block.

4. The method of claim 3, wherein the channel is provided by a cellular wireless telecommunication network.

5. The method of claim 3, wherein the data packet comprises audio and/or video data.

6. The method of claim 3, wherein the data packet belongs to an H.263-type bit stream and wherein some data is encoded by means of a fixed length coding scheme.

7. The method of claim 3, wherein at least the field containing information on the length of the data block is encoded by means of an error correction code.

8. The method of claim 3, wherein in case of detection of error and discarding an error resilience method is applied.

9. A computer program product, in particular digital storage medium, comprising program means for encoding a data packet, the data packet having a header block and a data block, the program means being adapted to perform the step of encoding the data packet by adding a field before the data block containing information on the length of the data block.

10. A computer program product, in particular digital storage medium, comprising program means for decoding a data packet, the data packet having a header block and a data block and an additional field containing information on the length of the data block, the program means being adapted to perform the steps of:
- detecting, whether there is an error in the data packet;
- in case of detection of error, using the information on the length of the data block for discarding the data block.

11. An encoder for encoding a data packet (200, 320, 322), the data packet having a header block (212) and a data block (214), the encoder comprising:
- means (310) for encoding the data packet by adding a field (216) before the data block containing information on the length of the data block.

12. A decoder for decoding a data packet (200, 320, 322), the data packet having a header block (212) and a data block (214) and an additional field (216) containing information on the length of the data block, the decoder comprising:
- means (314) for detecting, whether there is an error in the data packet;
- means (316) for in case of detection of error, using the information on the length of the data block for discarding the data block.

13. A telecommunication system for transmitting data packets (200, 320, 322), the data packets having a header block (212) and a data block (214), the telecommunication system comprising:
- means (310) for encoding the data packet by adding a field (216) before the data block containing information on the length of the data block;
- means for transmitting of the encoded data packet over a channel (306);
- means (314) for detecting, whether there is an error in the data packet;
- means (316) for in case of detection of error, using the information on the length of the data block for discarding the data block.
